**Europäisches Patentamt**

**European Patent Office**

**Office européen des brevets**

(11) Publication number:

**0 152 163**
**B1**

# (12) EUROPEAN PATENT SPECIFICATION

(45) Date of publication of patent specification: **28.03.90**

(21) Application number: **85300086.7**

(22) Date of filing: **07.01.85**

(51) Int. Cl.⁵: **C 03 B 25/06**, C 03 B 29/04, F 27 B 9/30

(54) Zoned lehr.

(30) Priority: **07.01.84 GB 8400362**

(43) Date of publication of application:
**21.08.85 Bulletin 85/34**

(45) Publication of the grant of the patent:
**28.03.90 Bulletin 90/13**

(84) Designated Contracting States:
**AT BE DE FR GB IT NL**

(56) References cited:
**DE-A-2 315 014**
**GB-A- 781 032**
**US-A-1 790 630**
**US-A-1 916 178**
**US-A-1 997 250**
**US-A-2 839 285**
**US-A-3 259 481**

(73) Proprietor: **STEIN ATKINSON STORDY LIMITED**
**Midland House Ounsdale Road**
**Wombourne Wolverhampton, WV5 8BY (GB)**

(72) Inventor: **Menzies, Michael Norwood**
**Longford House Giggetty Lane**
**Wombourne Wolverhampton, WV5 8BA (GB)**

(74) Representative: **Lightfoot, Robert Oscar et al**
**Raworth, Moss & Cook 36 Sydenham Road**
**Croydon Surrey, CR0 2EF (GB)**

Courier Press, Leamington Spa, England.

EP 0 152 163 B1

## Description

This invention relates to furnaces and is particularly but not exclusively concerned with glass container annealing and decorating lehrs.

Early annealing lehrs did not have air circulation; some were then provided with a fan towards the discharge end and more recently they have been divided longitudinally into zones with full air recirculation in at least one of the zones to improve heat transfer coefficients and enhance zonal temperature homogeneity. Such lehrs are exemplified by the disclosures of U.K. patents 1118832, 1449658 and 1495190. However, in the rapid cooling section of the lehr only a coarsely stepped approximation to an ideal cooling curve can be obtained and it is this insufficiency of temperature homogeneity that limits the capacity of this section of the lehr.

In decorating lehrs cold, decorated articles must be heated rapidly, subjected to an annealing stage at a fairly constant temperature and then rapidly cooled. The energy requirement for this process is high and, conventionally, much of the hot air at the discharge end of a decorating lehr is wasted.

It is therefore an object of the present invention to provide an improved furnace having enhanced air recirculation and which is particularly although not exclusively applicable to glass container annealing and decorating lehrs.

DE-A1-2315014 discloses a furnace through which articles may be continuously or intermittently passed from an inlet end to a discharge end, the furnace having at least one zone provided with air recirculation in which the zone is divided into a plurality of sub-zones each provided with separate means for circulating air within that sub-zone transversely of the direction of movement of articles therethrough and each sub-zone incorporates at least one flow control device permitting air from that sub-zone to pass to an adjoining sub-zone. The present invention provides such a furnace wherein the flow control device is movable from a first position in which recirculation occurs only in the sub-zone to a second position in which the air circulated over articles in the sub-zone is passed to an adjoining sub-zone, a variety of intermediate positions of the flow control device permitting different proportions of the air in each sub-zone to be recirculated therein or passed to an adjoining sub-zone.

When the furnace is an annealing lehr the zone may be disposed intermediate the length thereof. In this case the sub-zone at the discharge end of the zone may draw air from atmosphere and the sub-zone at the charge end of the zone may have a vent for exhausting air therefrom.

When the furnace is a decorating lehr two zones may be disposed respectively at the charge and discharge ends thereof; the sub-zone nearest the discharge end of the zone at the charge end of the furnace taking its air from the sub-zone nearest the charge end of the zone at the discharge end of the furnace.

The above and other aspects of the invention will now be described by way of example with reference to the accompanying drawings in which:-

Fig. 1 is a graph showing an ideal annealing curve for a glass annealing lehr;

Fig. 2 is a graph showing in exaggerated form a typical annealing curve in known glass annealing lehrs having some air recirculation;

Fig. 3 shows, diagramatically, a longitudinal section through a glass annealing furnace zone according to the present invention having four sub-zones;

Fig. 4 is a section on the line IV-IV of Fig. 3; and

Fig. 5 shows diagramatically, a longitudinal arrangement for a decorating lehr.

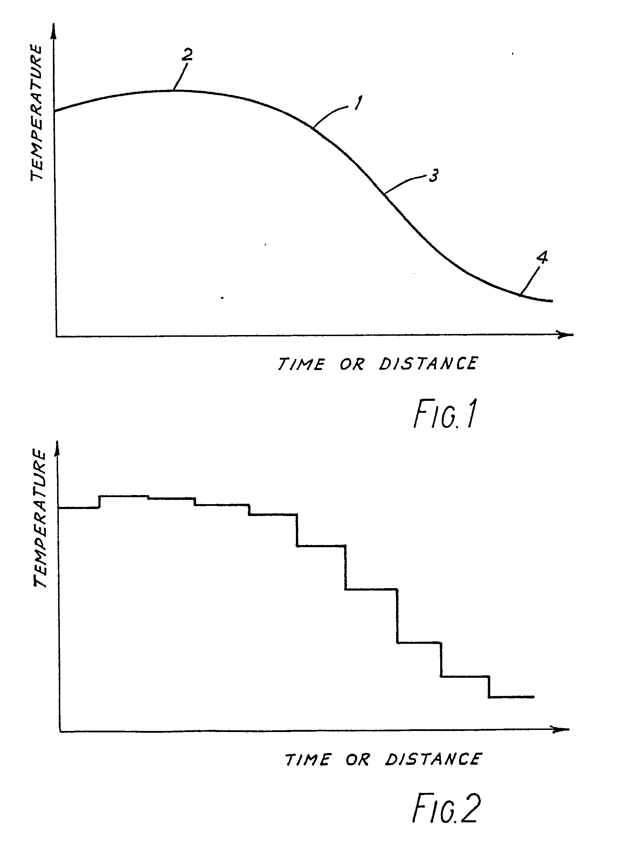

Fig. 1 of the drawings shows the ideal shape of curve 1 of temperature/time or distance, for a glass container annealing lehr. Typically glass containers from a glass making machine (not shown) will be passed directly into the lehr at a temperature of about 550°C. During their passage through the lehr their temperature will rise slightly at 2 and then fall rapidly at 3 to a fairly steady low level 4.

Fig. 2 shows, in slightly exaggerated manner, the type of stepped curve 5 obtained with conventional annealing furnaces having air recirculation in all of its zones. In practice the curve will actually lie somewhere between Figs. 1 and 2 but the form of the Fig. 2 curve clearly shows that the biggest "steps" inevitably occur at the steepest part of the curve representing rapid cooling and it is precisely during this period of rapid cooling that close control of temperature is most desirable.

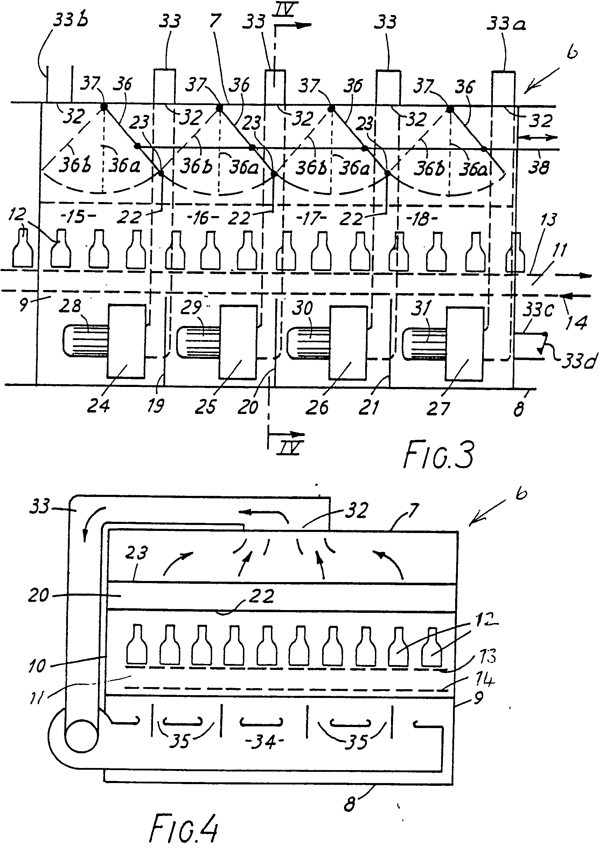

Figs. 3 and 4 of the drawings show a zone 6 of a glass annealing furnace, the remainder of which has been omitted. The zone 6 is disposed along the length of the furnace at a position approximating to the steepest part 3 of the annealing curve. The zone 6 has top, bottom and side walls 7, 8, 9 and 10 and a conveyor 11 for glass bottles 12 having an upper run 13 and a return run 14.

The zone 6 is divided into four sub-zones 15, 16, 17 and 18 separated by transverse walls 19, 20 and 21. Each wall has an opening 22 through which the conveyor 11 carrying its containers 12 may pass and the upper ends 23 of the walls are spaced from the top wall 7 of the zone 6. Externally of each sub-zone and below the level of the conveyor 11 centrifugal fans 24, 25, 26 and 27 driven by electric motors 28, 29, 30 and 31 are mounted. Air is drawn from the top of each sub-zone through apertures 32 (Fig. 4) into ducts 33 and 33a extending above the top wall 7 and downwardly outside the side wall 10 to the respective one of the fans. The fans 24, 25 and 26 are arranged to recirculate air only but the fan 27 has an inlet 33c normally closed by a weight controlled flap valve 33d communicating with the atmosphere externally of the zone 6. This air is then passed by each fan through a horizontal duct 34 extending through each sub-zone below the conveyor 12 and is discharged upwardly through apertures 35.

In the upper part of each sub-zone, a damper 36 is pivoted at its upper end 37 to the top wall 7. Intermediate their ends all the dampers are pivoted to a longitudinally movable blend control rod 38 operable in a manner, not shown, from outside the lehr.

It will be noted that the duct 33a associated with the sub-zone 18 at the discharge end of the zone 6 lies wholly inside the end of the zone. Similarly the duct 33b, which discharges to atmosphere, lies wholly within the sub-zone 15 at the input end of the zone. The remaining ducts 33 have their associated apertures 32 respectively in register with the transverse walls 19, 20 and 21.

By moving the rod 38 all the dampers 36 may be moved, together, from their full line positions, through dotted line positions 36a to chain line positions 36b. In the full line position of the dampers, the inlet duct 33a, at the discharge end of the zone 6 is shut off and hot, recirculated air from the sub-zones 18, 17 and 16 is respectively passed to the preceding sub-zones 17, 16 and 15 while recirculated air from the sub-zone 15 is exhausted via the duct 33b. Fresh air is drawn into the fan 27 and the duct 33 through the inlet 33c of sub-zone 18 when the suction therein opens the flap valve 33d. This condition represents the maximum rate of cooling where all the recirculated air is passed rearwardly through each sub-zone as rapidly as possible and is then exhausted to atmosphere.

In the chain line positions 36b of the dampers the outlet duct 33b is shut off and the air in each sub-zone is continuously recirculated within that sub-zone. This condition represents maximum recirculation and minimum cooling. The dotted line positions of the dampers 36 represent the large number of intermediate positions that the dampers may occupy to achieve variations in sub-zone recirculation and rate of cooling. It will be understood that although a single blend control rod 38 moving the dampers 36 in unison is preferred, the dampers could be controlled individually.

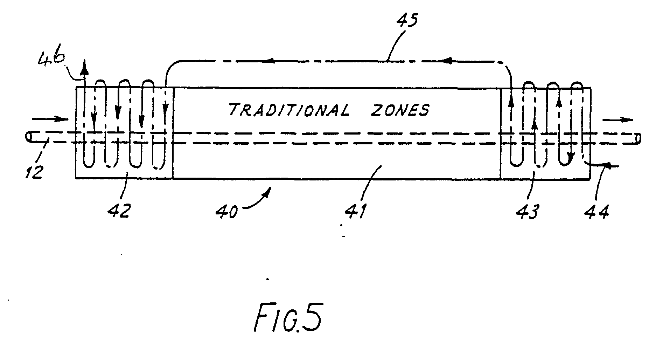

Fig. 5 of the drawings shows an arrangement for a decorating lehr 40 having a central part 41 made up of traditional zones and zones 42 and 43 respectively at the input and discharge ends of the lehr. These zones 42 and 43 are generally in accordance with Figs. 3 and 4 but the zone 42 is installed in reverse. Cold air is drawn from atmosphere at 44, passed through the sub-zones of the zone 43 which constitutes the rapid cooling part of the lehr and the very hot air passes through a duct 45 to the sub-zones of the zone 42. In this case the ware passing through the zone 42 is heated. Spent air carrying volatiles from the decoration process is exhausted to atmosphere at 46. Although the duct 45 has been shown to be external of the central part 41 it could pass therethrough. Alternatively the hot air could be discharged into the central part and drawn from the other end thereof into the zone 42.

In all the arrangements above described it will be understood that a small quantity of recirculated air will diffuse horizontally above the conveyor and the passage through which the ware 12 passes.

## Claims

1. A furnace through which articles may be continuously or intermittently passed from an inlet end to a discharge end, the furnace having at least one zone (6) provided with air recirculation in which the zone is divided into a plurality of sub-zones (15, 16, 17, 18) each provided with separate means (24, 25, 26, 27) for circulating air within that sub-zone transversely of the direction of movement of articles (12) therethrough and each sub-zone incorporates at least one flow control device (36) permitting air from that sub-zone to pass to an adjoining sub-zone, characterised in that the flow control device is movable from a first position (36b) in which recirculation occurs only in the sub-zone to a second position (36) in which the air circulated over articles in the sub-zone is passed to an adjoining sub-zone, a variety of intermediate positions of the flow control device permitting different proportions of the air in each sub-zone to be recirculated therein or passed to an adjoining sub-zone.

2. A furnace according to claim 1 in which openings (23) are formed in the upper ends of transverse walls (19, 20, 21) between sub-zones to permit said passage of air.

3. A furnace according to claim 1 or claim 2 having the zone intermediate the length thereof, the sub-zone at the discharge end of the zone draws air (33a) from atmosphere and the sub-zone at the charge end of the zone has a vent (33b) for exhausting air therefrom.

4. A furnace (40) according to claim 1 or claim 2 having two zones (42, 43) respectively at the charge and discharge ends thereof; the sub-zone nearest the discharge end of the zone (42) at the charge end of the furnace taking its air from the sub-zone nearest the charge end of the zone (43) at the discharge end of the furnace.

## Patentansprüche

1. Ofen, durch den Gegenstände kontinuierlich oder intermittierend von einem Einlaßende zu einem Abgabeende geleitet werden können, wobei der Ofen zumindest eine Zone (6) aufweist, die mit einer Luftumwälzung versehen ist, in der die Zone in eine Mehrzahl von Subzonen (15, 16, 17, 18) unterteilt ist, die je mit einer gesonderten Einrichtung (24, 25, 26, 27) zum Zirkulieren von Luft innerhalb dieser Subzone quer zur Richtung der Bewegung der Gegenstände durch sie hindurch versehen sind, und die je zumindest eine Mengenregelungsvorrichtung (36) enthalten, die es der Luft aus dieser Subzone ermöglicht, zu einer anschließenden Subzone zu gelangen, dadurch gekennzeichnet, daß die Mengenregelungsvorrichtung von einer ersten Position (36b), in der eine Umwälzung nur in der Subzone erfolgt, in eine zweite Position (36) bewegbar ist,

5 EP 0 152 163 B1 6

in der die über Gegenstände in der Subzone zirkulierte Luft zu einer anschließenden Subzone geleitet wird, wobei verschiedene Zwischenpositionen der Mengenregelungsvorrichtung ermöglichen, daß die Luft in jeder Subzone in unterschiedlichen Anteilen darin umgewälzt bzw. zu einer anschließenden Subzone geleitet wird.

2. Ofen nach Anspruch 1, in dem Öffnungen (23) in den oberen Enden von Querwänden (19, 20, 21) zwischen Subzonen gebildet sind, um den Durchgang von Luft zu erlauben.

3. Ofen nach Anspruch 1 oder 2, der die Zone bezogen auf deren Länge an einer Zwischenstelle hat, wobei die Subzone am Abgabeende der Zone Luft (33a) aus der Umgebung aufnimmt und die Subzone am Beschickungsende der Zone eine Entlüftungsöffnung (33b) zum Ablassen von Luft aus ihr hat.

4. Ofen (40) nach Anspruch 1 oder 2, mit zwei Zonen (42, 43), eine an seinem Beschickungsende und eine an seinem Abgabeende; wobei die dem Abgabeende der Zone (42) am Beschickungsende des Ofens nächstgelegene Subzone ihre Luft von der Subzone aufnimmt, die dem Beschickungsende der Zone (43) am Abgabeende des Ofens am nächsten liegt.

**Revendications**

1. Four dans lequel des articles peuvent être déplacés d'une manière continue ou intermittente pour aller d'une extrémité d'entrée à une extrémité d'évacuation et qui comprend au moins une zone (6) dans laquelle est réalisée une circulation d'air et qui est subdivisée en plusieurs zones partielles (15, 16, 17, 18) comportant chacune des moyens séparés (24, 25, 26, 27), qui, dans la zone partielle en question, assurant la circulation de l'air dans le sens transversal par rapport à la direction dans laquelle les articles (12) sont déplacés, chaque zone partielle comprenant au moins un dispositif (36) de commande de l'écoulement permettant le passage de l'air de la zone partielle en question à la zone partielle voisine, caractérisé en ce que ce dispositif de commande de l'écoulement peut passer d'une première position (36b) dans laquelle la circulation ne se fait que dans la zone partielle à une deuxième position (36) dans laquelle l'air qui est passé sur les articles contenus dans la zone partielle est envoyé dans une zone partielle voisine, toute une série de positions intermédiaires de ce dispositif de commande de l'écoulement permettant de modifier la proportion d'air de chaque zone partielle qui doit continuer à y circuler ou passer dans la zone partielle voisine.

2. Four selon la revendication 1, caractérisé en ce que des ouvertures (23) sont ménagées pour permettre le passage de l'air dans les extrémités supérieures de parois transversales (19, 20, 21) séparant les zones partielles.

3. Four selon l'une des revendications 1 ou 2, caractérisé en ce que la zone est intermédiaire à la longueur du four, la zone partielle située à l'extrémité d'évacuation prélève de l'air (33a) dans l'atmosphère, et la zone partielle située à l'extrémité d'introduction de la zone comporte une ouverture (33b) pour l'évacuation de l'air.

4. Four (40) selon l'une des revendications 1 ou 2, caractérisé en ce qu'il comporte deux zones (42, 43) situées respectivement aux extrémités d'introduction et d'évacuation du four, la zone partielle (42) située à proximité de l'extrémité d'évacuation du four recevant, à son extrémité d'introduction, l'air provenant de l'extrémité d'évacuation de la zone partielle (43) située à proximité de l'extrémité d'introduction du four.

FIG.1

FIG.2

FIG.3

FIG.4

FIG.5